# EUROPEAN PATENT APPLICATION

(11) **EP 4 722 664 A1**
(43) Date of publication of application: **08.04.2026**
(21) Application number: 25200121.9
(22) Date of filing: 04.09.2025
(51) Int. Cl.: G01F 3/08, G01F 15/14

(54) **OSCILLATING-PISTON FLOWMETER CHAMBER AND METER COMPRISING SUCH A CHAMBER**

(30) Priority: 03.10.2024 FR 2410670
(71) Applicant: DIEHL METERING SAS, 68304 Saint Louis (FR)
(72) Inventor: Stehlin, Christophe, Mulhouse (FR); Munck, Christophe, Hausgauen (FR)
(74) Representative: Diehl Patentabteilung

(57) **Abstract**

The invention relates to a metering chamber (1) of a liquid flowmeter of oscillating-piston (3) type, which chamber comprises a cylindrical lateral wall (4), a bottom, a cover and a partition extending radially inwards from the cylindrical lateral wall (4), the piston (3) comprising a cylindrical body (8) across which there passes a planar wall (9) forming a discoid web formed as one piece therewith, this planar wall (9) being provided with through-openings (10, 10'),
which chamber (1) is characterized in that the through-openings (10) of a first population of through-openings (10, 10') in the discoid web (9) are distributed in a quincunx arrangement that is divergent towards the wall (8') of the cylindrical body (8) and is provided by an elementary motif (ME) repeated about the central axis of the piston (3), and in that the mutually-adjacent through-openings (10) of this first population are mutually spaced by at least a minimum distance.

## Description

The present invention relates to the field of liquid flowmeters and more particularly to that of liquid flowmeters of the oscillating-piston type. The subject thereof is an oscillating-piston flowmeter chamber and a meter comprising such a chamber.

Meters of the aforementioned type are well known in the state of the art, notably for their precision and their reliability. Such a meter is for example disclosed in document US 3 369 614.

The applicant company has also developed oscillating-piston meters described in documents EP 0 627 614 and EP 1 946 050.

The present invention seeks to offer a version of the meters from these last two documents that is improved, particularly in terms of wearing resistance and strength, and notably to preserve the piston which is subjected to the liquid flow.

In positive-displacement liquid flowmeters such as those that form the subject matter of the aforementioned documents, the cylindrical oscillating piston is the part that moves cyclically in the metering chamber of the meter. The movement of the piston is transmitted to various components that will meter the volume of fluid passing through the meter.

During the piston movement brought about by the fluid passing through the metering chamber, the fluid has to pass via a flat central region of the piston (a planar wall forming a reinforcing web and guide element providing guidance in a plane of travel of the piston in the chamber) in order to fill all the empty regions of the metering chamber. Openings are created in this central region in order to allow the fluid to pass. This passage creates an axial force on the piston which reduces the wearing resistance of this component and also of those parts of the chamber with which it is in contact. Because the functional clearances in positive-displacement meters are very small, even a minimal amount of wearing of the component may lead to a loss in metrological performance.

It has already been proposed that this problem be solved by creating cylindrical openings in the flat region of the piston. However, the axial force nevertheless remains great and leads to axial wearing of the piston. In addition, the openings need to remain small in order not to create internal leakage paths that could reduce the metrological performance of the meter. Thus, the openings in the piston of these known chamber designs are not optimized in terms of bore section and of layout in relation to the travel of the piston in the chamber.

Moreover, in other proposed designs, the flat region is transferred to one end of the piston, but that then creates more friction on the surface in contact with the metering chamber, this having the consequences of slowing the piston at low flow rates and of reducing the metrological performance. The component is also less well-balanced, resulting in reduced metering effectiveness.

The present invention seeks to offer another solution able to overcome the aforementioned disadvantages, and notably to reduce still further the axial force on the piston by maximizing the bore section at the piston without compromising its mechanical strength and at the same time enabling it to be manufactured in plastic by injection moulding.

To this end, the principal subject of the invention is a metering chamber of a liquid flowmeter of oscillating-piston type,
this chamber comprising a cylindrical lateral wall of central axis, a bottom, a cover and a partition extending radially inwards from the cylindrical lateral wall,
the piston comprising a cylindrical body of central axis and across which there passes a planar wall forming a discoid web formed as one piece therewith, this planar wall being provided with through-openings and compartmentalizing the interior of said cylindrical body transversely with respect to the central axis thereof,
the chamber and the piston comprising mutually-collaborating means providing guided movement of said piston in the chamber with the central axis of the piston rotating about the central axis of the chamber,
a slot being present in the lateral wall of the cylindrical body and being extended by a cutout in the planar wall, and
the partition extending through the slot and into the cutout to a depth and at an orientation that both vary according to the position of the piston in the chamber,
which chamber is characterized in that the through-openings of a first population of through-openings in the discoid web are distributed, when considered radially from the central axis of the piston, in a quincunx arrangement that is divergent towards the wall of the cylindrical body and is provided by an elementary motif repeated about said central axis, and in that the mutually-adjacent through-openings of this first population are mutually spaced by at least a minimum distance, the through-openings closest to a given through-opening advantageously all being spaced therefrom by said distance.

Another subject of the invention is a liquid flowmeter comprising such a metering chamber.

The invention will be better understood by virtue of the description below, which relates to preferred embodiments provided by way of nonlimiting examples and explained with reference to the appended schematic drawings, in which:
[Fig. 1] is a perspective view of an oscillating-piston liquid flowmeter comprising a metering chamber according to one embodiment of the invention and mounted on a pipe portion;
[Fig. 2A] and [Fig. 2B] are views of the meter depicted in Figure 1 in cross section on a vertical plane containing the median axis of the pipe portion;
[Fig. 3] is a view from above of the meter of Figures 1 and 2, the upper part of the meter and the cover of the metering chamber having been removed (only the cylindrical sleeve belonging to the cover is depicted, this coinciding with the cylindrical sleeve belonging to the bottom of the metering chamber);
[Fig. 4A] and [Fig. 4B] are views from above of the metering chamber depicted in Figure 3, the piston being in a different position each time;
[Fig. 5] is a perspective view, to a different scale, of the piston mounted in the chamber depicted in Figures 3 and 4;
[Fig. 6] is an exploded view of the chamber depicted in Figures 2, in the bottom and cover;
[Fig. 7] is a view from above, similar to that of Figures 3 and 4, showing the radial and circular-arc rows of the through-openings in the planar wall that forms the web of the piston;
[Fig. 8] is a perspective view, from beneath, of the metering chamber depicted in exploded form in Figure 6;
[Fig. 9] is a partial view, to a different scale, of a region of the web of the piston depicted in Figures 3, 4 and 7, showing the elementary motif of the through-openings of the first population;
[Fig. 10] is a view of detail A of Figure 9, to a different scale;
[Fig. 11] is a partial view similar to Figure 9, showing the repeat of the elementary motif and part of the quincunx motif generated by this repeat;
[Fig. 12] is a symbolic depiction illustrating the definition of a through-opening of the first population in the web of the piston;
[Fig. 13A], [Fig. 13B], [Fig. 13C] and [Fig. 13D] symbolically depict four consecutive steps in defining a through-opening of the first population in the web of the piston;
[Fig. 14A], [Fig. 14B], [Fig. 14C] and [Fig. 14D] illustrate the circulation of liquid in the metering chamber and through the web of the piston, according to the position of the latter in its cyclic oscillatory movement;
[Fig. 15] is a view from above of a variant embodiment of a piston;
[Fig. 16A], [Fig. 16B], [Fig. 16C], [Fig. 16D], [Fig. 16E], [Fig. 16F], [Fig. 16G] and [Fig. 16H] illustrate various successive positions during the relative movement of the metering chamber in the piston frame of reference for a cyclic movement of said piston;
[Fig. 17] is a symbolic depiction illustrating the path of the cylindrical sleeves and of the central stud belonging to the cover of the metering chamber, constructed from the successive positions of Figures 16;
[Fig. 18] is a symbolic depiction illustrating the regions containing the through-openings in the web of the piston, these being deduced from Figure 17; and
[Fig. 19] is a partial view, to a different scale, of a region of the web of the variant embodiment of the piston depicted in Figure 15, showing the elementary motif of the through-openings of the first population, after the manner of Figure 9 for the variant embodiment of the piston of Figures 3, 4 and 7;
[Fig. 20] is a view of another oscillating-piston liquid flowmeter in cross section, on a vertical plane containing the median axis of the pipe portion of said meter, which comprises a metering chamber according to another embodiment of the invention;
[Fig. 21] is an exploded view, to a different scale, of the chamber that forms part of the meter depicted in Figure 20;
[Fig. 22] is a view of the chamber depicted in Figures 20 and 21 in cross section on a vertical plane containing the central axes of the chamber and of the piston;
[Fig. 23A] and [Fig. 23B] are views in cross section, similar to that of Figure 22, but of only the chamber (the piston having been removed), in the assembled state (Figure 23A) and in the exploded state (Figure 23B);
[Fig. 24A] and [Fig. 24B] are perspective views of the chamber depicted in Figures 20 and 21, respectively without an exterior filter over the supply openings (Figure 24A) and with such filters (Figure 24B).

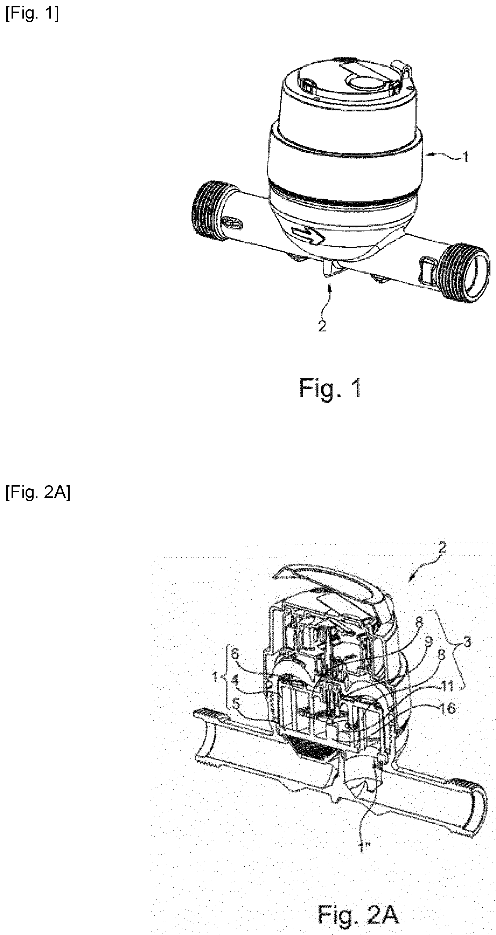

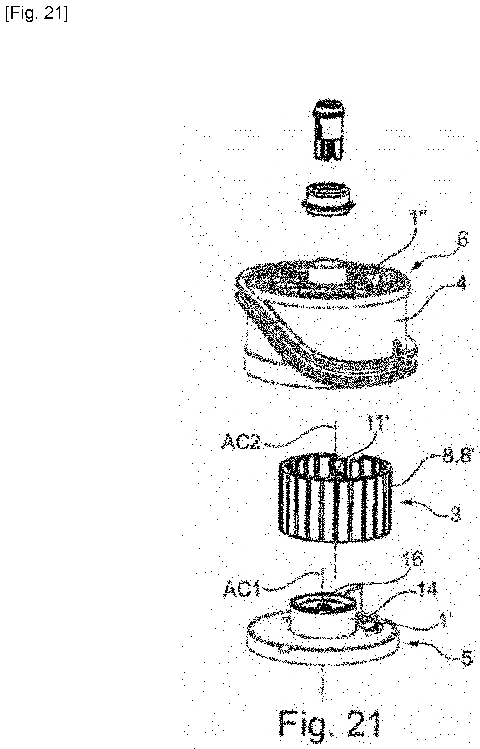

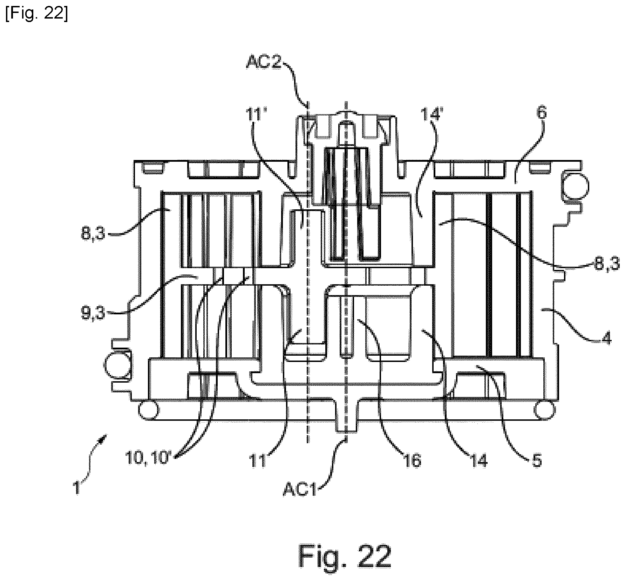

Figures 1 to 12, 14, 16 and 20 to 24 all, at least partially, depict a chamber (1) of a liquid flowmeter (2) of oscillating-piston (3) type.

This chamber (1) comprises a cylindrical lateral wall (4) of central axis (AC1), a bottom (5), a cover (6) and a partition (7) extending radially inwards from the cylindrical lateral wall (4). The piston (3) comprises a cylindrical body (8) of central axis (AC2) and across which there passes a planar wall (9) forming a discoid web formed as one piece therewith. This planar wall (9) is provided with through-openings (10, 10', 10") and compartmentalizes the interior of said cylindrical body (8) transversely with respect to the central axis (AC2) thereof.

Furthermore, a slot (12) is present in the lateral wall (8') of the cylindrical body (8) and is extended by a cutout (13) in the planar wall (9).

The partition (7) extends through the slot (12) and into the cutout (13) to a depth and at an orientation that both vary according to the position of the piston (3) in the chamber (1).

The oscillatory movement of the piston (3) in the metering chamber (1) is entirely comparable with that described and depicted in documents EP 0 627 614 and EP 1 946 050.

According to the invention, the through-openings (10, 10") of a first population of through-openings (10, 10', 10") in the discoid web (9) are distributed, when considered radially from the central axis (AC), in a quincunx arrangement that is divergent towards the wall (8') of the cylindrical body (8) and is provided by an elementary motif (ME) repeated about said central axis (AC2) of the piston (3), and the mutually-adjacent through-openings (10, 10") of this first population are mutually spaced by at least a minimum distance (E), the through-openings (10, 10") closest to a given through-opening (10) advantageously all being spaced therefrom by said distance (E).

The aforementioned arrangements of the invention make it possible to provide a metering chamber having a piston offering the optimal compromise between, on the one hand, a maximum bore section for the liquid through the web thereof (significantly limiting the axial force on the piston and therefore offering improved wearing resistance) and, on the other hand, good mechanical strength and the possibility of manufacturing it inexpensively in plastic using injection moulding. Specifically, the provision of a quincunx arrangement of the aforesaid openings (10) makes it possible to maximize the number of them while conforming to a minimum thickness (E) of material between all of the openings (10) and guarantees said web and the piston have sufficient stiffness and mechanical strength. Furthermore, this network of bridges of material of minimum width allows for a good distribution of the molten thermoplastic in the mould during injection moulding.

As is apparent from the attached figures, and according to an advantageous embodiment of the invention, provision is made for the piston (3) to comprise two opposing half-shafts (11, 11'), extending one on each side of said web (9) and together defining the central axis (AC2) of the cylindrical body (8). In addition, the bottom (5) and the cover (6) are advantageously provided with mutually aligned identical internal cylindrical sleeves (14, 14') all arranged around the central axis (AC2). Furthermore, these two sleeves (14, 14') advantageously extend towards one another inside the chamber (1) and receive the planar wall (9) of the piston (3) between them as a sliding fit. Finally, one (14) of these two sleeves (14, 14') advantageously forms, with a stud (16) that is aligned with the central axis (AC1) of the chamber (1), is formed on the bottom (5) or the cover (6), and is situated inside this sleeve (14), a guided-circulation circular path, around said central axis (AC1), for a cylindrical follower (11) formed by one of the half-shafts (11, 11'), providing guided movement of said piston (3) in the chamber (1) while the cylindrical body (8) of the piston (3) is also moving pressed against the internal face of the cylindrical lateral wall (4) of the chamber (1).

More specifically, and still in accordance with the aforementioned advantageous embodiment, the cylindrical follower (11) and the lateral wall (8') of the cylindrical body (8) of the piston (3), on the one hand, and, on the other hand, the wall of the at least one (14) of the internal cylindrical sleeves (14, 14') belonging to the bottom (5) and to the cover (6) and the cylindrical lateral wall (4) of the chamber (1) are configured in such a way that the cylindrical roller (11) circulates in rolling-sliding contact with the internal face of the wall of the internal cylindrical sleeve (14) concerned, being advantageously guided between this sleeve and the central stud (16), and the lateral wall (8') of the cylindrical body (8) of the piston (3) circulates in rolling-sliding contact with the internal face of the cylindrical lateral wall (4) of the chamber (1) during the cyclic oscillatory movement of the piston (3) in the chamber (1) under the action of the circulating liquid (L) passing through said chamber. Of course, the other half-shaft (11') also circulates in rolling-sliding contact with the internal face of the wall of the other sleeve (14') not associated with a stud (16).

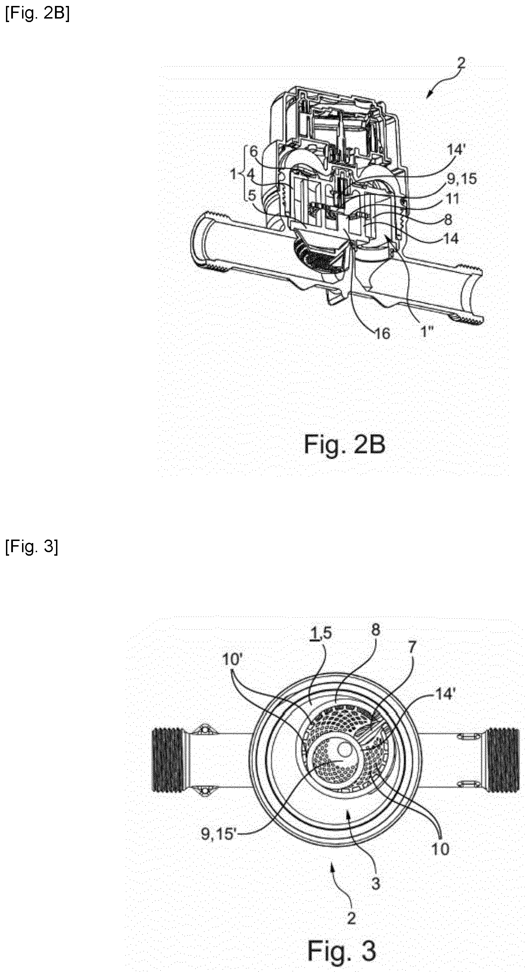

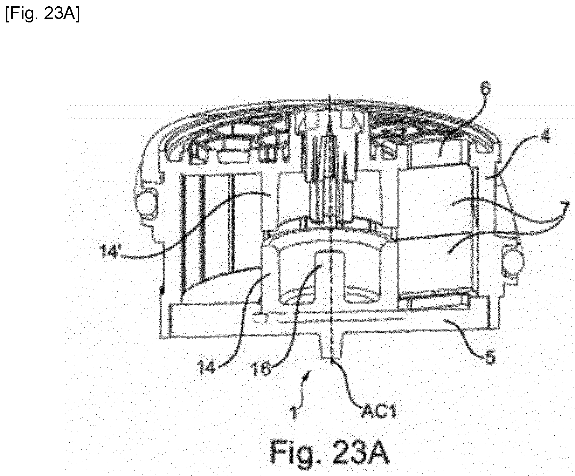

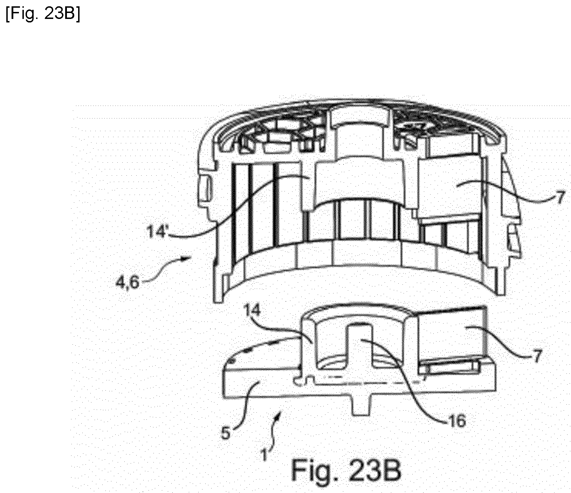

As is also apparent from the various figures, the partition (7) is fixed in the chamber (1) and may be formed as a single piece and in its entirety with the cover (6) or with the bottom (5), and possibly with the cylindrical lateral wall (4), or else may be mounted as a single piece in one of these parts (as shown in Figures 3, 4, 6, 14, 16 and 17). This fixed partition (7) may, as a variant, also be formed of two constituent parts assembled with one another during the creation of the chamber (1). Each of these two parts may be formed as a single piece with, or may be mounted in, the cover and the bottom respectively (see Figures 23).

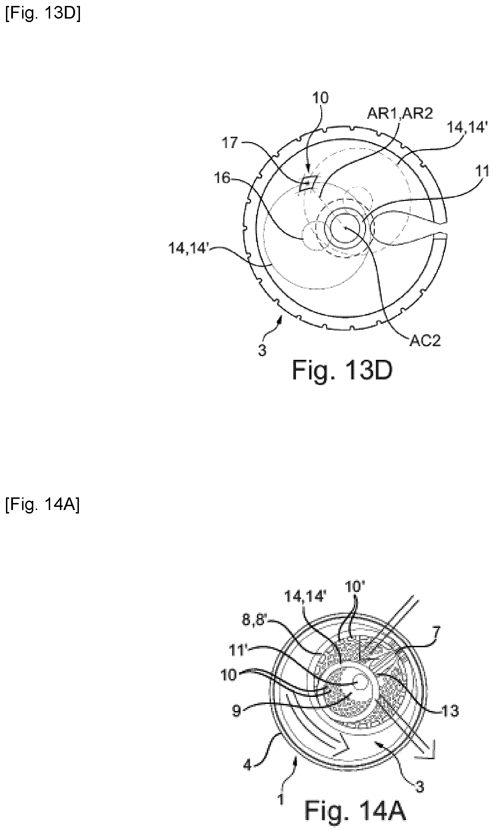

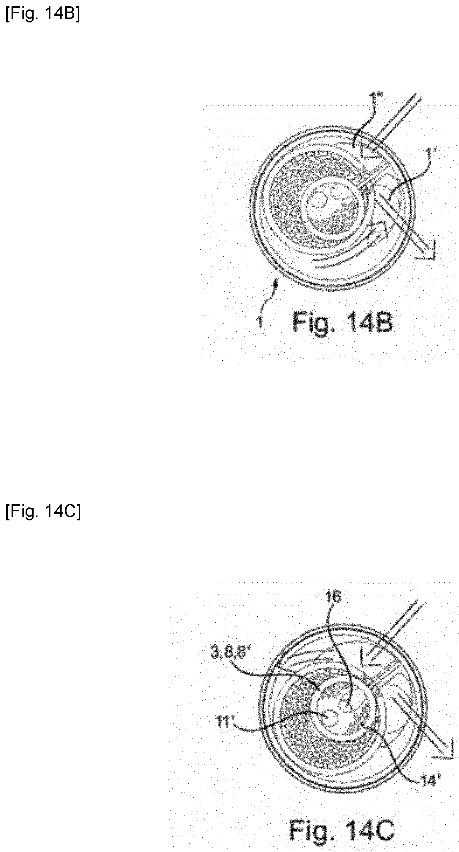

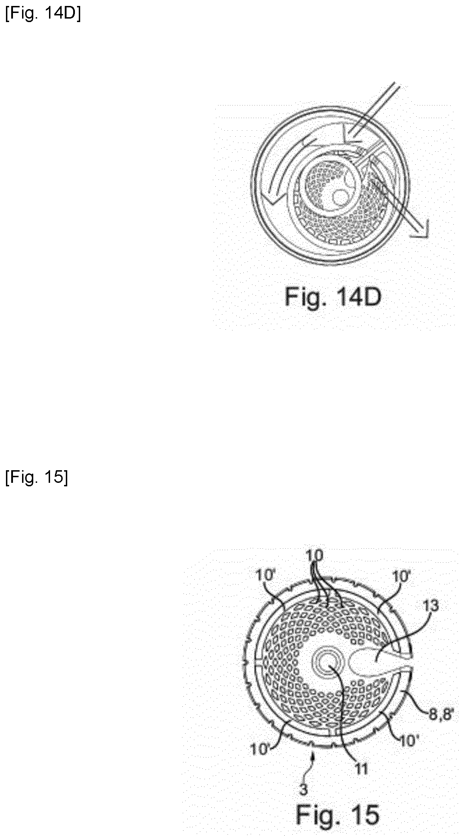

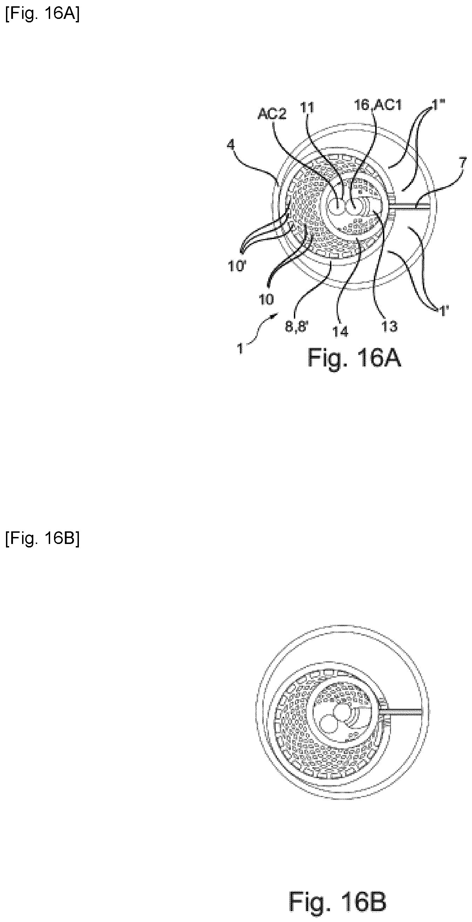

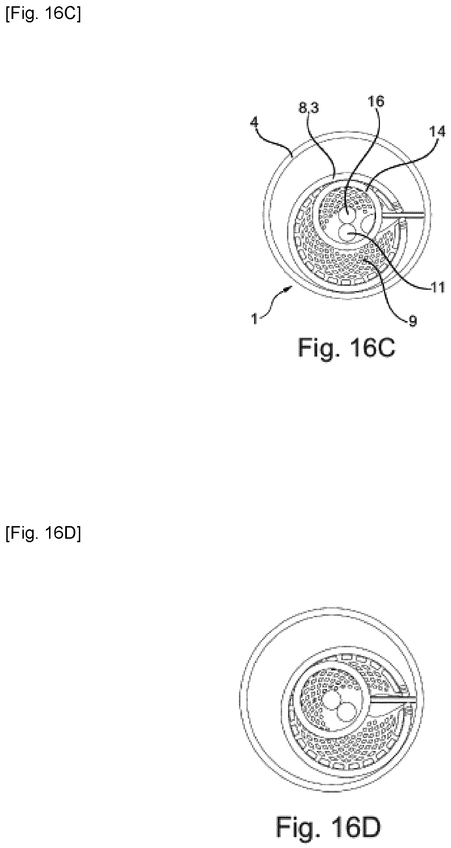

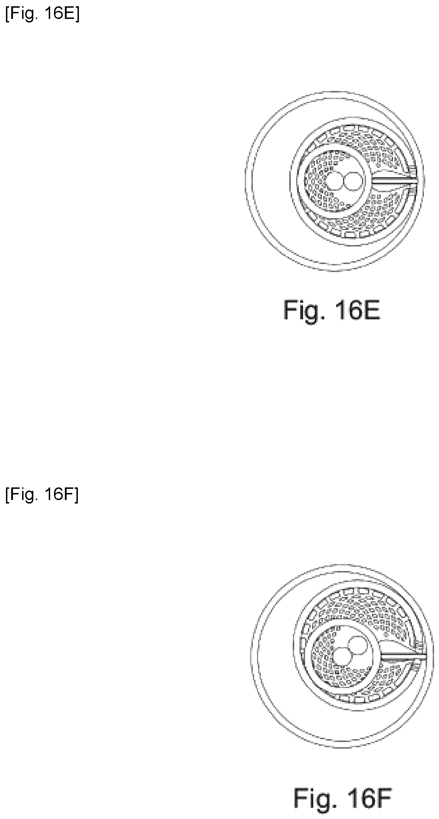

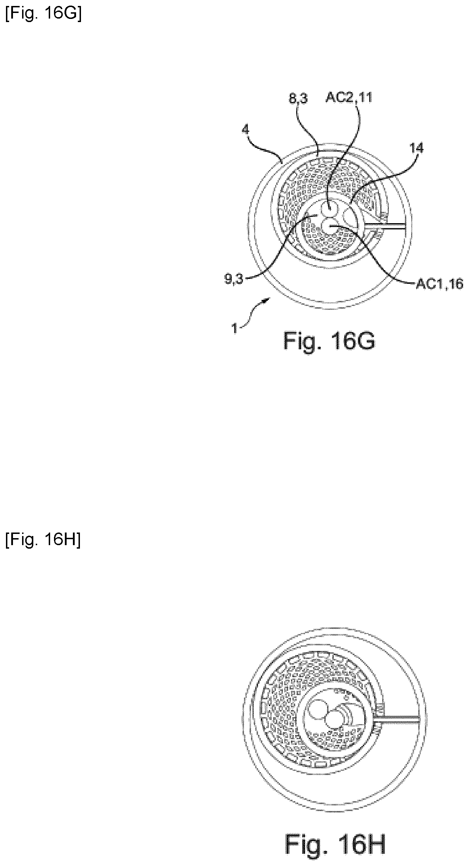

This fixed wall (7) extends through the slot (12) and into the cutout (13) to a depth and at an orientation that both vary, as shown for example by Figures 14 and 16, according to the position of the piston (3) in the chamber (1), and to the position of the cylindrical follower (11) in the sleeve (14, 14') that accepts it, during the cyclic oscillatory movement of the piston (3) in the chamber (1) under the action of a liquid (L) circulating through this chamber between at least one supply opening (1') and at least one discharge opening (1").

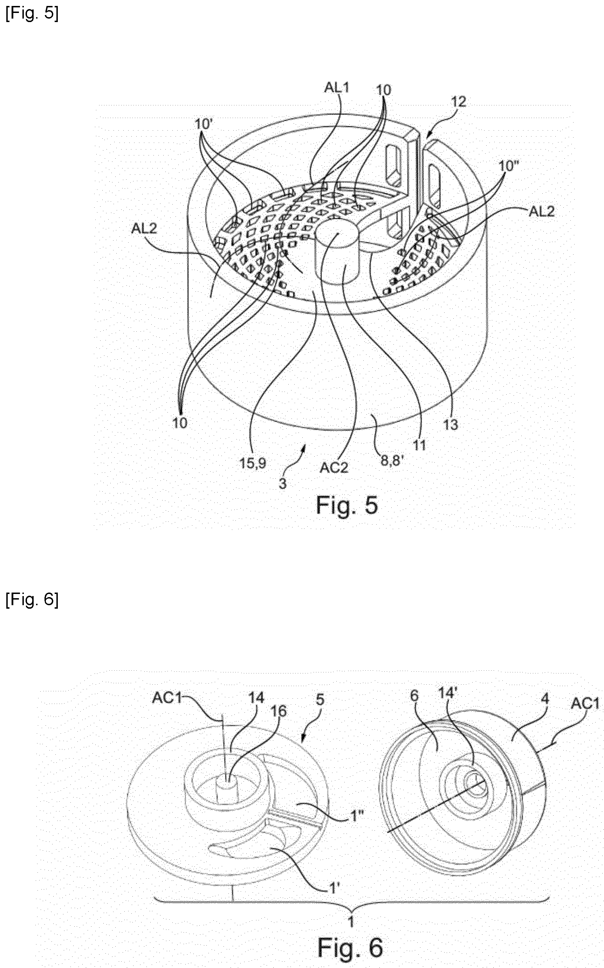

The piston (3) and the components of the metering chamber (2) itself (the cylindrical lateral wall (4), the bottom (5) and the cover (6)) may advantageously be manufactured by injection moulding in a thermoplastic, for example from the styrene family, such as notably polystyrene. The wall (4) may be produced as a single piece with either the cover (6) or equally the bottom (5), advantageously with the cover (6) as shown in Figures 6, 21 and 23.

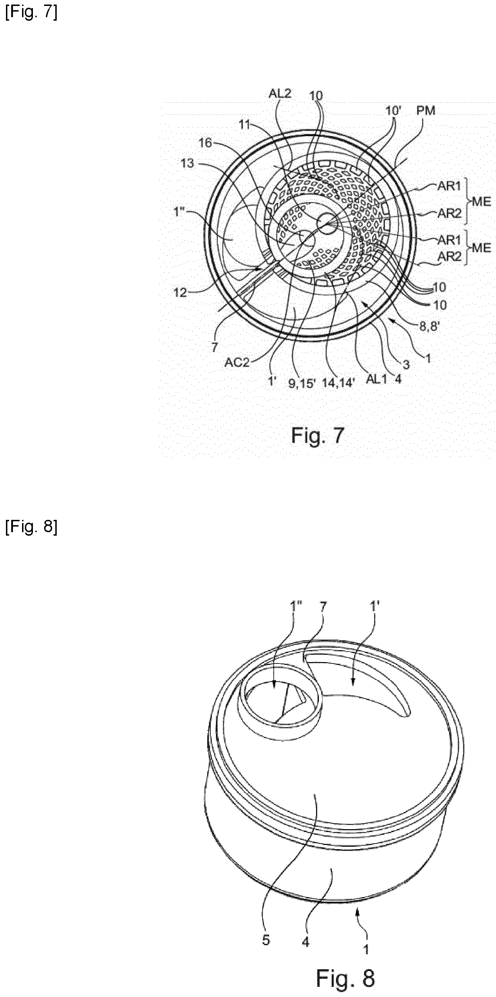

According to a preferred embodiment, and as shown by way of example in Figures 7, 9 and 11, the elementary motif (ME) that is repeated, at an angular pitch (PA), about the central axis (AC2) of the piston comprises two radial rows (AR1, AR2) of through-openings (10, 10") that are partially mutually imbricated with their respective through-openings (10, 10") alternating, these rows being spaced apart about this central axis (AC2) by an angle (A) that corresponds to half the angular pitch (PA) of the repeat.

Given the aforementioned rules applied in determining their location, and as illustrated by Figures 5, 7 and 11, the openings (10, 10") of the first population of through-openings (10, 10', 10") are arranged in circular-arc linear arrangements (AL1, AL2), these linear arrangements (AL1, AL2) extending from the central region (15) surrounding the cylindrical follower (11) or from the region (15') surrounding the cutout (13) towards the peripheral region (15") of the discoid web (9) which region is connected to the lateral wall (8') of the cylindrical body (8).

More specifically, the openings (10) of the first population of through-openings (10, 10') are arranged in a motif formed of two series of circular-arc linear arrangements (AL1, AL2) imbricated in one another, each linear arrangement (AL1, AL2) having a radius of curvature identical to the radius of the cylindrical sleeves (14, 14') and the linear arrangements (AL1, AL2) of the one same series of linear arrangements having the one same direction of inclination or of wrapping around the cylindrical follower (11).

In fact, each through-opening (10) of the first population belongs to two circular-arc linear arrangements (AL1 and AL2), each belonging to a different series of linear arrangements (AL1, AL2), the through-opening (10) concerned constituting the intersection between the two linear arrangements (AL1, AL2) of the two series to which it simultaneously belongs.

In order to offer a maximum bore section, combined with the possibility for the cylindrical sleeves (14, 14') to easily completely block off these bores and with conformance with the minimum separation (E) between openings, provision is advantageously made for the through-openings (10, 10") of the first population to have, potentially in respect of at least a majority of openings (10), the overall shape of parallelograms or of lozenges. In addition, the separation between each pair of two opposing sides of the parallelogram or lozenge formed by each through-opening (10) is advantageously at most equal to, and preferably slightly less than, the thickness of the walls of the two cylindrical sleeves (14, 14').

Furthermore, in order to conform to the quincunx arrangement, one of the two diagonals of each of these through-openings (10) of the one same radial row (AR1, AR2) is colinear or coincident with the axis of the radial row (AR1, AR2) to which said through-openings (10) concerned belong.

Given the above-mentioned constraints, and as shown more particularly in Figures 7, 9 and 11, the parallelogram-shaped or lozenge-shaped through-openings (10) of the one same radial row (AR1, AR2) have different shapes and sizes, and notably diagonal lengths that vary according to their distance from the central axis (AC2) of the piston (3), preferably with a progressive shortening of the diagonal that is colinear or coincident with the axis of the radial row (AR1, AR2) concerned and progressive lengthening of the other diagonal, the collection of through-openings (10) of the radial rows (AR1, AR2) of one of the two types thus forming concentric circular arrangements of through-openings (10) of identical shape and size, centred on the central axis (AC), it being possible for an additional, internal, circular arrangement of through-openings (10") of polygonal, for example hexagonal, shape, belonging to one of the two types of radial rows (AR1, AR2) also potentially to be present.

These through-openings (10") of this additional internal circular arrangement, which are of polygonal shape, notably of hexagonal shape in the attached drawings, in fact correspond to parallelograms or lozenges that have been truncated in order to conform to the minimum separation (E) between the adjacent through-openings (10, 10") of the first population.

As is likewise apparent from Figures 7, 9 and 11 in particular, the through-openings (10, 10") of the first population, advantageously comprising parallelogram-shaped or lozenge-shaped through-openings (10) and polygon-shaped through-openings (10") constitute concentric circular arrangements about the central axis (AC2) of the piston (3), with the arrangements of openings (10, 10") belonging to the two radial rows (AR1, AR2) alternating and with through-openings (10, 10") of two adjacent arrangements being offset by an angle (A).

According to a preferred constructional feature of the invention, combined with the practical considerations of creating the through-openings, the parallelogram-shaped or lozenge-shaped through-openings (10) have sides that correspond to arcs of a circle, the sides of each of the two pairs of opposing sides that form the parallelogram or lozenge of one through-opening (10) being defined by the intersection of portions of the external and internal circumferences, of different radii (R1 and R2), of the internal cylindrical sleeves (14, 14') in the two positions that the piston (3) occupies as it performs its cyclic oscillatory movement, in which positions said internal cylindrical sleeves (14, 14') block the through-opening (10) concerned.

Thus, the radius of curvature (R1) of, and the line followed by, the circular-arcs that form the interior sides of the through-openings (10) with respect to the central axis (AC) are defined by the radius of curvature of, and the line followed by, the internal circumference of the internal cylindrical sleeves (14, 14'). Likewise, the radius of curvature (R2) of, and the line followed by, the circular-arcs that form the exterior sides of the through-openings (10) with respect to the central axis (AC2) are defined by the radius of curvature of, and the line followed by, the external circumference of said internal cylindrical sleeves (14, 14'), this being true of all said through-openings (10) and also, where applicable, of the relevant sides of the hexagonally-shaped through-openings (10").

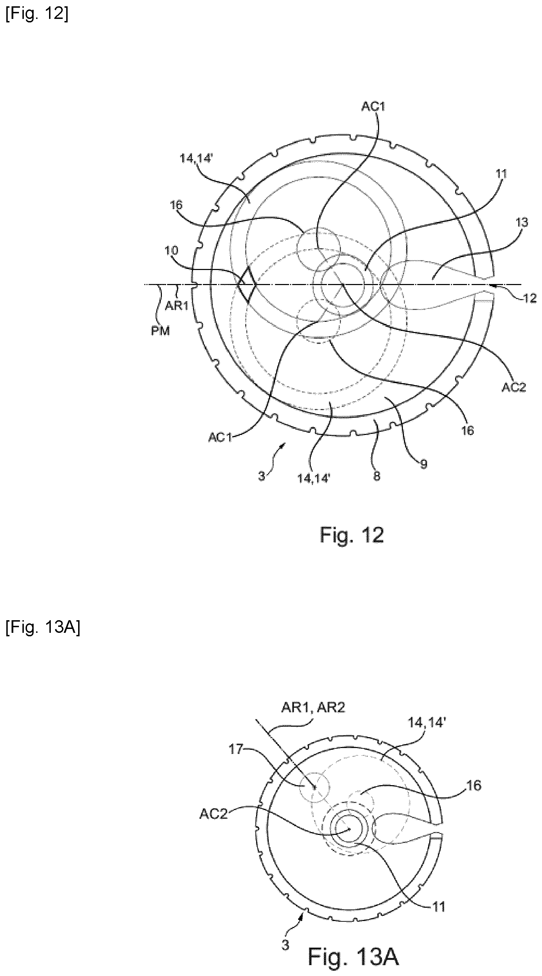

The geometric definition of a through-opening (10) is illustrated by construction (by superposition) in Figure 12 in respect of an opening situated on a radial row (AR1) coinciding with the midplane (PM) of the web (9) of the piston (3).

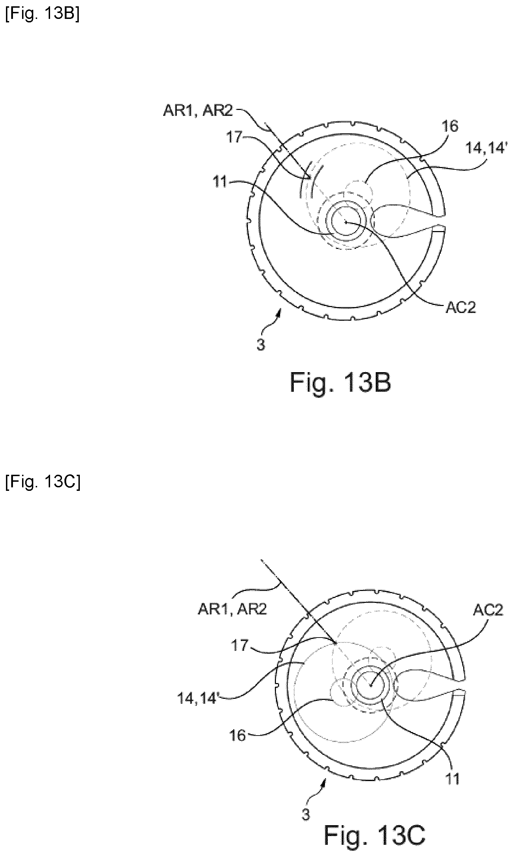

It is also illustrated in the form of four successive sequences in Figures 13 in respect of an opening (10) situated on another radial row (AR1, AR2). In these figures, the references 14, 14' indicate the median circles of the cylindrical slaves and the circle indicated in broken line around the follower (11) represents the path of the central point of the stud (16) around said follower. Note that once the location of the central point (17) of a future opening (10) has been determined in accordance with the desired quincunx arrangement, the sides of the opening are determined by the wall portions of the cylindrical sleeves when the median circles thereof cross the central point in the two possible positions of the piston (3) that satisfy this condition.

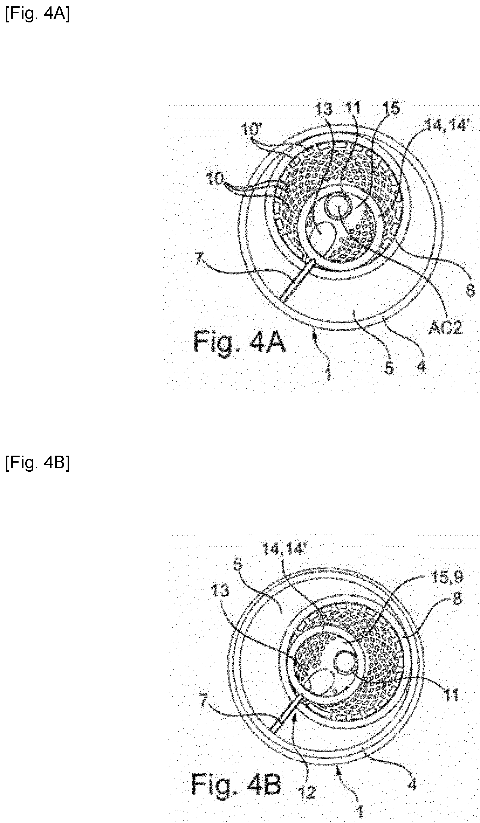

According to another beneficial feature of the invention, notably making it possible to increase the bore section through the web (9) of the piston (3), as illustrated by way of example in Figures 4, 5, 7, 9, 11 and 14 to 16, the through-openings (10, 10') comprise a second population of through-openings (10') which are arranged such that together they form a discontinuous open peripheral band present on the periphery of the discoid web (9) and extending along the internal face of the lateral wall (8') of the cylindrical body (8) of the piston (3), the width of said open band being at most, and preferably substantially, equal to the width of the wall of the cylindrical sleeves (14, 14'), and said through-openings (10') advantageously having the shape of a curved rectangle or of an annulus portion.

As was the case with the through-openings (10, 10") of the first population of same, and for the same reasons, provision is advantageously made for the peripheral through-openings (10') of the second population to be spaced from the nearest through-openings (10) of the first population, and advantageously from one another, by at least the minimum distance (E) and preferably substantially this distance (E).

The bridges of material that interrupt the peripheral open band and delineate the through-openings (10') of the second population may potentially represent the bare minimum, in terms of number and thickness, for obtaining a sufficiently stiff and strong connection between the web (9) and the lateral wall (8') that forms the cylindrical body (8) of the piston (3), as for example illustrated by the variant embodiment of Figure 15.

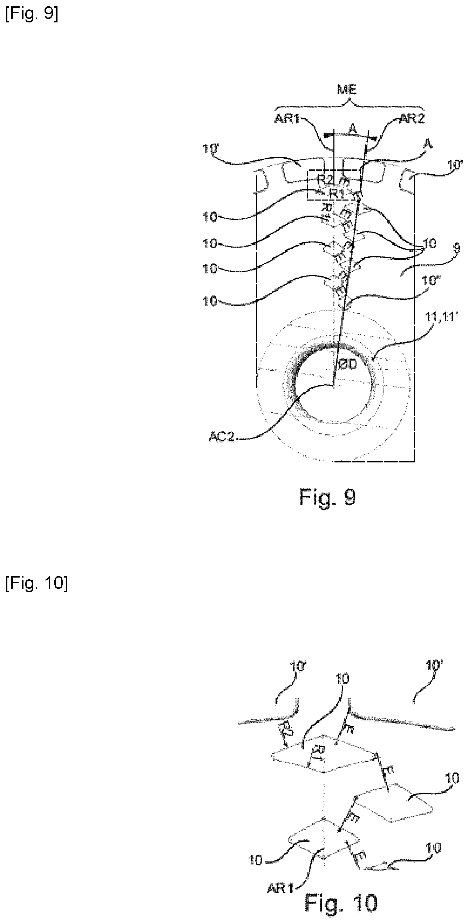

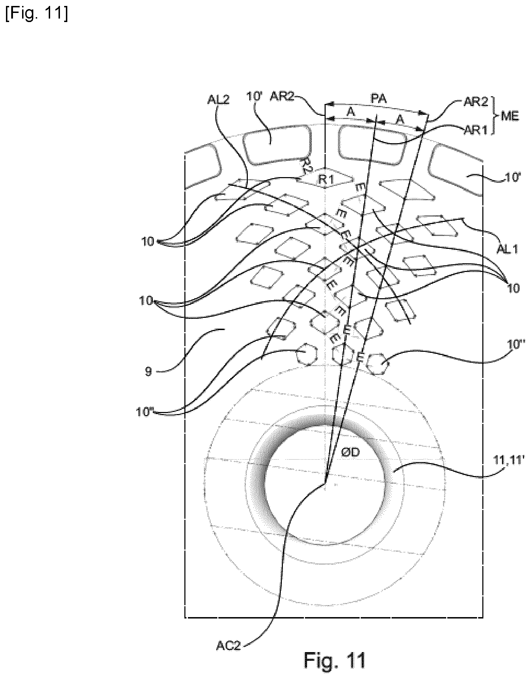

However, a design as depicted in the other aforementioned figures is preferred, notably for considerations associated with the stiffness of the piston and the ability to manufacture it using injection moulding. Note that provision may also be made for the repeat pitch or angular extension about the central axis (AC) of the elementary motif (ME) of the through-openings (10) of the first population to correspond to the repeat pitch of the through-openings (10') of the second population along the periphery of the discoid web (9), as visible for example in Figures 9 and 11.

As also shown in the figures, and for considerations associated with the stiffness and mechanical strength of the piston, and at the same time with optimizing the passage of liquid through the piston and controlling said passage, the through-openings (10, 10', 10") are present on the entire surface of the planar wall (9) with the exception of a central region (15) surrounding the two half-shafts (11 and 11'), corresponding to that region of the planar wall (9) that is swept by the cylindrical follower (11), and of a boundary region (15') bordering the cutout (13), both of which regions are solid and continuous. In addition, the size of said through-openings (10, 10') increases from said central or boundary region (15, 15') towards the cylindrical lateral wall (4) and these through-openings (10, 10') are configured in terms of size and shape and arranged in terms of position and orientation of the through-openings (10, 10') in such a way that each of them is completely blocked by the cylindrical sleeves (14, 14') in at least two positions occupied by the piston (3) in the chamber (1) during its cyclic oscillatory movement.

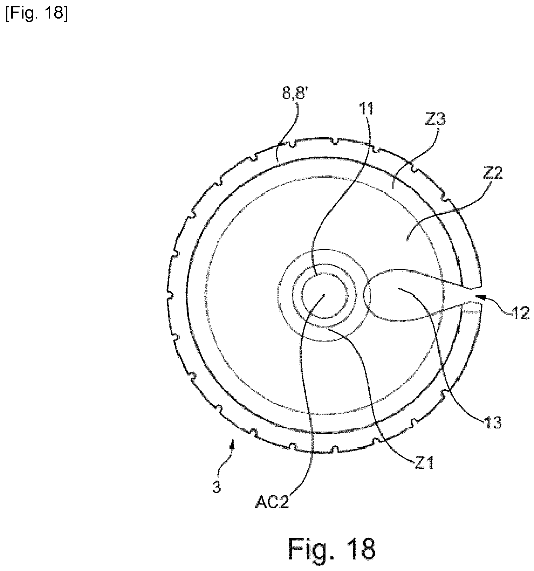

Figure 18 indicates the three regions (Z1, Z2, Z3) of the web (9) of the piston (3) that are of relevance for containing the through-openings (10, 10', 10"), namely: the region (Z1) in where any opening is of no benefit; the region (Z2) containing the through-openings (10 10") of the first population (under the conditions mentioned hereinabove and with the possibility of fluidtight isolation of the internal and external volumes of the cylindrical sleeves (14, 14') in the metering chamber (1)); the region (Z3) in which complete openness is sought, but where there are nevertheless structural and manufacturing limitations on achieving this. The absence of openings (10, 10") in the central and boundary regions (15, 15') mentioned hereinabove contributes to the stiffness and mechanical strength of the web (9) and of the piston (3).

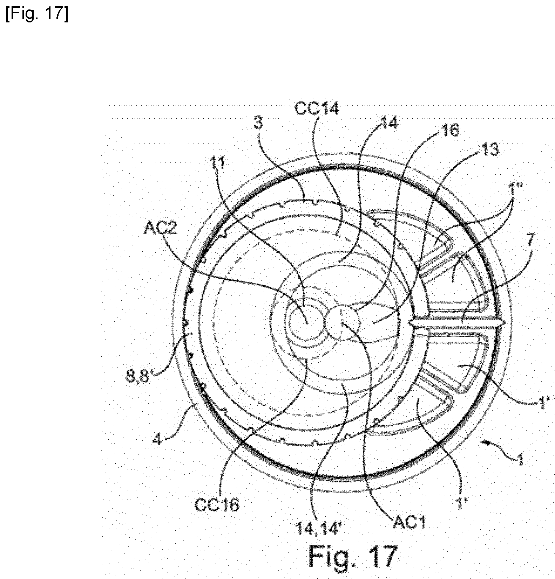

These three distinct regions are derived from Figure 17 which shows the paths (CC14, CC16) of the internal and external faces of the walls of the cylindrical sleeves (14, 14') relative to the frame of reference of the web (9) of the piston (3).

In order to be able to provide smooth flow of liquid through the piston, provision is advantageously made for the through-openings (10, 10', 10") and the cutout (13) to be configured, in terms of the shape, size and arrangement in the planar wall (9), in such a way that the ratio of the bore sections through this wall, on the one hand, on the inside of the cylindrical sleeves (14, 14') and, on the other hand, on the outside thereof, has a value that remains substantially constant whatever the position of the piston (3) in the chamber (1).

Moreover, in order to achieve a shape that allows even distribution of material during injection moulding, in connection with the minimum separation (E), as well as the possibility for reversible precise and reliable operation of the metering chamber in connection with the movement of the piston (3), the through-openings (10, 10') are advantageously arranged and distributed symmetrically with respect to a midplane (PM) of the cutout (13), which plane is perpendicular to the plane of the discoid web (9) and contains the axis of the cylindrical follower (11).

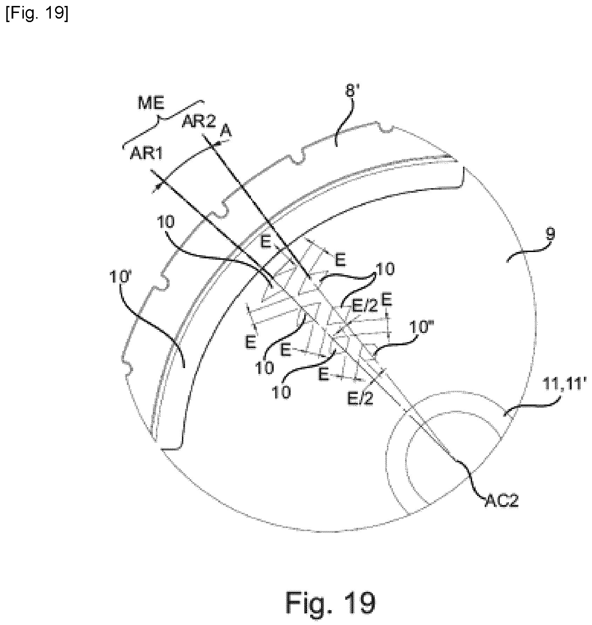

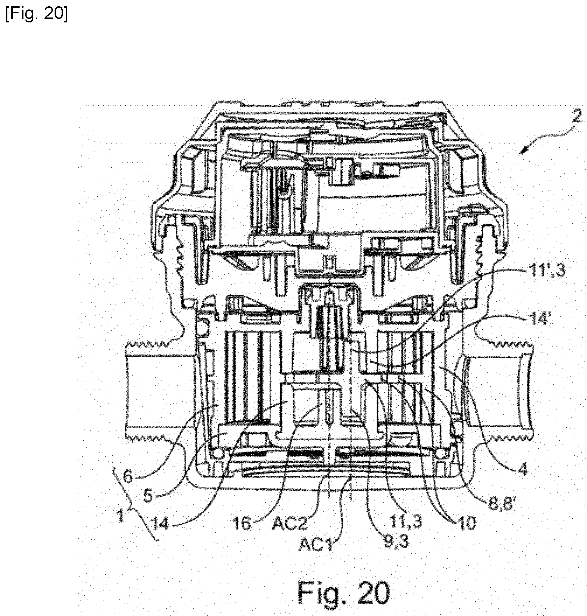

The various features described hereinabove in connection with the embodiment depicted in Figures 1 to 19 and regarding the piston (3), the web (9) and the through-openings therein also apply to the alternative embodiment depicted in Figures 20 to 24, even though they are not directly apparent from these figures.

As shown by the relevant attached figures, the supply opening (1') and the discharge opening (1") for the liquid (L) may both be situated in the bottom (5) of the chamber (1) and situated one on each side of the fixed partition (7). In a variant, one of said openings (1', 1") may be situated in the cover (6), which for example is in the form of an open shell with the lateral wall (4) and defines the interior volume of the metering chamber (1), with the other situated in the bottom (5) which closes said shell.

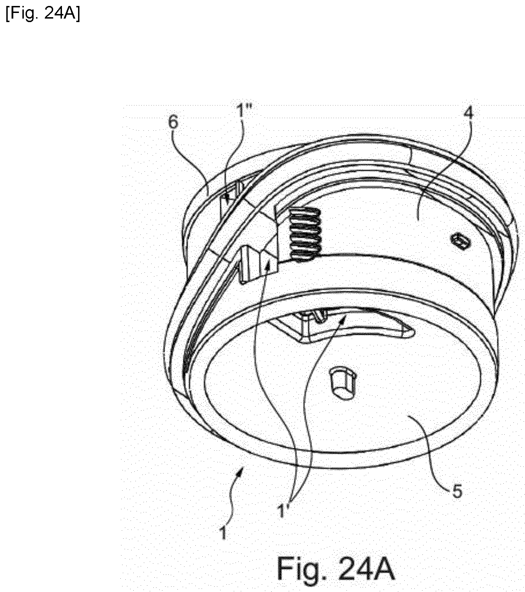

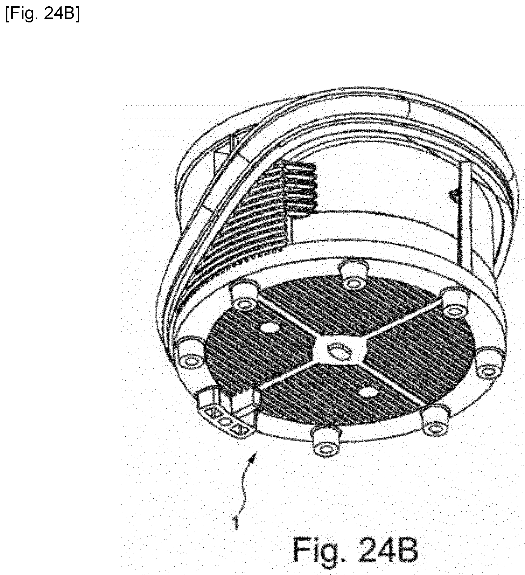

In yet another variant, at least two supply openings (1') and/or at least two discharge openings (1") may be provided, at least one of these (supply and/or discharge) openings being able to be situated in the lateral wall (4), as shown for example in Figure 24A. When the chamber (1) comprises more than one supply and/or discharge opening, it is possible that only part of the liquid flow passing through the chamber (1) will pass through the web (9) of the piston (3). Nevertheless, the improvements and advantages afforded by the invention remain appreciable in such an instance.

As shown in Figures 1, 2 and 20, the invention also relates to a liquid flowmeter (2) of the oscillating piston (3) type, characterized in that it comprises a liquid flowmeter metering chamber (1), containing said oscillating piston (3), as described hereinabove. It should be noted that the chamber (1) and its improved oscillating piston (3) that form the subjects of the invention may be fitted in existing meters, having a bulk, an exterior shape, and fluidic and mechanical connections identical to those of existing chambers such that they may thus replace the latter right from the time of manufacture of the meters concerned or during maintenance operations.

Of course, the invention is not limited to the embodiments that are described and shown in the appended drawings. Modifications remain possible, in particular from the point of view of the makeup of the various elements or through substitution of technical equivalents, without departing from the scope of protection of the invention.

## Claims

1. Chamber (1) of a liquid flowmeter (2) of oscillating-piston (3) type,
the chamber (1) comprising a cylindrical lateral wall (4) of central axis (AC1), a bottom (5), a cover (6) and a partition (7) extending radially inwards from the cylindrical lateral wall (4),
the piston (3) comprising a cylindrical body (8) of central axis (AC2) and across which there passes a planar wall (9) forming a discoid web formed as one piece therewith, this planar wall (9) being provided with through-openings (10, 10', 10") and compartmentalizing the interior of said cylindrical body (8) transversely with respect to the central axis (AC2) thereof,
the chamber (1) and the piston (3) comprising mutually-collaborating means (11, 11', 14, 14') providing guided movement of said piston (3) in the chamber (1) with the central axis (AC2) of the piston (3) rotating about the central axis (AC1) of the chamber (1),
a slot (12) being present in the lateral wall (8') of the cylindrical body (8) and being extended by a cutout (13) in the planar wall (9), and
the partition (7) extending through the slot (12) and into the cutout (13) to a depth and at an orientation that both vary according to the position of the piston (3) in the chamber (1),
which chamber (1) is **characterized in that** the through-openings (10, 10") of a first population of through-openings (10, 10', 10") in the discoid web (9) are distributed, when considered radially from the central axis (AC2) of the piston (3), in a quincunx arrangement that is divergent towards the wall (8') of the cylindrical body (8) and is provided by an elementary motif (ME) repeated about said central axis (AC2), and **in that** the mutually-adjacent through-openings (10, 10") of this first population are mutually spaced by at least a minimum distance (E), the through-openings (10, 10") closest to a given through-opening (10) advantageously all being spaced therefrom by said distance (E).

2. Chamber of a liquid flowmeter according to Claim 1, **characterized in that** the piston (3) comprises two opposing half-shafts (11, 11'), extending one on each side of said web (9) and together defining the central axis (AC2) of the cylindrical body (8), and/or **in that** the bottom (5) and the cover (6) are provided with mutually aligned identical internal cylindrical sleeves (14, 14') all arranged around the central axis (AC2), and/or **in that** these two sleeves (14, 14') extend towards one another inside the chamber (1) and receive the planar wall (9) of the piston (3) between them as a sliding fit, and/or **in that** at least one (14) of these two sleeves (14, 14') forms, with at least one stud (16) that is aligned with the central axis (AC1) of the chamber (1), is formed on the bottom (5) or the cover (6), and is situated inside this sleeve (14), a guided-circulation circular path, around said central axis (AC1), for a cylindrical follower (11) formed by one of the half-shafts (11, 11'), providing guided movement of said piston (3) in the chamber (1) while the cylindrical body (8) of the piston (3) is also moving pressed against the internal face of the cylindrical lateral wall (4) of the chamber (1).

3. Chamber of a liquid flowmeter according to Claim 1 or 2, **characterized in that** the elementary motif (ME) that is repeated, at an angular pitch (PA), about the central axis (AC2) of the piston (3) comprises two radial rows (AR1, AR2) of through-openings (10, 10") that are partially mutually imbricated with their respective through-openings (10, 10") alternating, these rows being spaced apart about this central axis (AC2) by an angle (A) that corresponds to half the angular pitch (PA) of the repeat.

4. Chamber of a liquid flowmeter according to one of Claims 1 or 2, **characterized in that** the through-openings (10, 10") of the first population have, potentially in respect of at least a majority of openings (10), the overall shape of parallelograms or of lozenges, and **in that** one of the two diagonals of each of these through-openings (10) of the one same radial row (AR1, AR2) is colinear or coincident with the axis of the radial row (AR1, AR2) to which said through-openings (10) belong.

5. Chamber of a liquid flowmeter according to Claim 3, **characterized in that** the parallelogram-shaped or lozenge-shaped through-openings (10) of the one same radial row (AR1, AR2) have different shapes and sizes, and notably diagonal lengths that vary according to their distance from the central axis (AC2) of the piston (3), preferably with a progressive shortening of the diagonal that is colinear or coincident with the axis of the radial row (AR1, AR2) concerned and a progressive lengthening of the other diagonal, the collection of through-openings (10) of the radial rows (AR1, AR2) of one of the two types thus forming concentric circular arrangements of through-openings (10) of identical shape and size, centred on the central axis (AC2), it being possible for an additional, internal, circular arrangement of through-openings (10") of polygonal, for example hexagonal, shape, belonging to one of the two types of radial rows (AR1, AR2) also potentially to be present.

6. Chamber of a liquid flowmeter according to any one of Claims 1 to 4, **characterized in that** the through-openings (10, 10") of the first population, advantageously comprising parallelogram-shaped or lozenge-shaped through-openings (10) and polygon-shaped through-openings (10") constitute concentric circular arrangements about the central axis (AC2) of the piston (3), with the arrangements of openings (10, 10") belonging to the two radial rows (AR1, AR2) alternating and with through-openings (10, 10") of two adjacent arrangements being offset by an angle (A).

7. Chamber of a liquid flowmeter according to one of Claims 3 to 6, provided that these claims are dependent on Claim 2, **characterized in that** the parallelogram-shaped or lozenge-shaped through-openings (10) have sides that correspond to arcs of a circle, the sides of each of the two pairs of opposing sides that form the parallelogram or lozenge of one through-opening (10) being defined by the intersection of portions of the external and internal circumferences, of different radii (R1 and R2), of the internal cylindrical sleeves (14, 14') in the two positions that the piston (3) occupies as it performs its cyclic oscillatory movement, in which positions said internal cylindrical sleeves (14, 14') block the through-opening (10) concerned.

8. Chamber of a liquid flowmeter according to Claim 2 or any one of Claims 3 to 7, provided that these claims are dependent on Claim 2, **characterized in that** the through-openings (10, 10') comprise a second population of through-openings (10') which are arranged such that together they form a discontinuous open peripheral band present on the periphery of the discoid web (9) and extending along the internal face of the lateral wall (8') of the cylindrical body (8) of the piston (3), the width of said open band being at most, and preferably substantially, equal to the width of the wall of the cylindrical sleeves (14, 14'), and said through-openings (10') advantageously having the shape of a curved rectangle or of an annulus portion.

9. Chamber of a liquid flowmeter according to Claim 8, **characterized in that** the peripheral through-openings (10') of the second population are spaced from the nearest through-openings (10) of the first population, and advantageously from one another, by at least the minimum distance (E) and preferably substantially this distance (E).

10. Chamber of a liquid flowmeter according to Claim 2 or any one of Claims 3 to 9, provided that these claims are dependent on Claim 2, **characterized in that** the through-openings (10, 10', 10") are present on the entire surface of the planar wall (9) with the exception of a central region (15) surrounding the two half-shafts (11 and 11'), corresponding to that region of the planar wall (9) that is swept by the cylindrical follower (11), and of a boundary region (15') bordering the cutout (13), both of which regions are solid and continuous, and **in that** the size of said through-openings (10, 10') increases from said central or boundary region (15, 15') towards the cylindrical lateral wall (4) and **in that** the through-openings (10, 10') are configured in terms of size and shape and arranged in terms of position and orientation of the through-openings (10, 10') in such a way that each of them is completely blocked by the cylindrical sleeves (14, 14') in at least two positions occupied by the piston (3) in the chamber (1) during its cyclic oscillatory movement.

11. Chamber of a liquid flowmeter according to Claim 2 or any one of Claims 3 to 9, provided that these claims are dependent on Claim 2, **characterized in that** the through-openings (10, 10', 10") and the cutout (13) are configured, in terms of the shape, size and arrangement in the planar wall (9), in such a way that the ratio of the bore sections through this wall, on the one hand, on the inside of the cylindrical sleeves (14, 14') and, on the other hand, on the outside thereof, has a value that remains substantially constant whatever the position of the piston (3) in the chamber (1).

12. Chamber of a liquid flowmeter according to any one of Claims 1 to 11, **characterized in that** the through-openings (10, 10') are arranged and distributed symmetrically with respect to a midplane (PM) of the cutout (13), which plane is perpendicular to the plane of the discoid web (9) and contains the axis of the cylindrical follower (11).

13. Chamber of a liquid flowmeter according to Claim 2 or any one of Claims 3 to 12, provided that these claims are dependent on Claim 2, **characterized in that** the cylindrical follower (11) and the lateral wall (8') of the cylindrical body (8) of the piston (3), on the one hand, and, on the other hand, the wall of the at least one of the internal cylindrical sleeves (14, 14') belonging to the bottom (5) and to the cover (6) and the cylindrical lateral wall (4) of the chamber (1) are configured in such a way that the cylindrical roller (11) circulates in rolling-sliding contact with the internal face of the wall of the internal cylindrical sleeve (14, 14') concerned and that the lateral wall (8') of the cylindrical body (8) of the piston (3) circulates in rolling-sliding contact with the internal face of the cylindrical lateral wall (4) of the chamber (1) during the cyclic oscillatory movement of the piston (3) in the chamber (1) under the action of the circulating liquid (L) passing through said chamber.

14. Chamber of a liquid flowmeter according to Claim 13, **characterized in that** associated with the internal cylindrical sleeve (14) concerned with the circulation of the cylindrical follower (11) is a central stud (16) which, with the wall of said sleeve (14), defines a circulation path for said cylindrical follower (11).

15. Liquid flowmeter (2) of the oscillating-piston (3) type, **characterized in that** it comprises a liquid flowmeter metering chamber (1), containing the oscillating piston (3), according to any one of Claims 1 to 14.
